# EUROPEAN PATENT SPECIFICATION

(11) **EP 4 575 629 B1**
(45) Date of publication and mention of the grant of the patent: **25.11.2026**
(21) Application number: 23867082.2
(22) Date of filing: 30.06.2023
(51) Int. Cl.: G02F 1/21

(54) **OPTICAL MODULATOR AND MODULATION METHOD**
OPTISCHER MODULATOR UND MODULATIONSVERFAHREN
MODULATEUR OPTIQUE ET PROCÉDÉ DE MODULATION

(30) Priority: 22.09.2022 CN 202211170389
(43) Date of publication of application: 25.06.2025
(73) Proprietor: Huawei Technologies Co., Ltd., Shenzhen, Guangdong 518129 (CN)
(72) Inventor: DONG, Zhen, Shenzhen, Guangdong 518129 (CN); JIAN, Jian, Shenzhen, Guangdong 518129 (CN); ZHANG, Peijie, Shenzhen, Guangdong 518129 (CN); LIU, Chenjun, Shenzhen, Guangdong 518129 (CN); GUI, Chengcheng, Shenzhen, Guangdong 518129 (CN)
(74) Representative: Isarpatent
(86) International application number: PCT/CN2023/105379
(87) International publication number: WO 2024/060787

(56) References cited:
- CN-A- 106 134 104
- CN-A- 109 661 612
- CN-A- 110 149 153
- CN-A- 110 361 876
- CN-A- 113 646 693
- CN-A- 115 079 446
- US-A1- 2011 170 161
- US-A1- 2011 170 161
- US-A1- 2014 153 860

## Description

### TECHNICAL FIELD

This application relates to the field of optical communication, and in particular, to an optical modulator and a modulation method.

### BACKGROUND

In the field of optical communication, an optical sending device may convert an electrical signal into an optical signal by using an optical modulator. For example, a Mach-Zehnder modulator is a most commonly used optical modulator structure. The Mach-Zehnder modulator includes a beam splitter, a first ground electrode, a first waveguide, a signal electrode, a second waveguide, a second ground electrode, and a beam combiner. An output end of the beam splitter is connected to input ends of the first waveguide and the second waveguide. An input end of the beam combiner is connected to output ends of the first waveguide and the second waveguide. The signal electrode is located between the first waveguide and the second waveguide. The first waveguide is located between the first ground electrode and the signal electrode. The second waveguide is located between the second ground electrode and the signal electrode. The signal electrode is configured to connect to one end of a differential electrical signal. The first ground electrode and the second ground electrode are configured to connect to a ground cable. In actual application, modulation efficiency of the optical modulator is low.

CN 113 646 693 A discloses an optical modulator having a Mach-Zehnder type optical waveguide structure with an electrode arrangement wherein two ground electrodes sandwich three signal electrodes, and differential signals are applied to the signal electrodes to achieve lower voltage driving.

### SUMMARY

This application provides an optical modulator and a modulation method. By adding a signal electrode, a voltage amplitude of modulation can be increased, thereby improving modulation efficiency.

A first aspect of this application provides an optical modulator. The optical modulator includes a beam splitter, a first ground electrode, a first waveguide, a first signal electrode, a second waveguide, a second signal electrode, and a beam combiner. An output end of the beam splitter is connected to input ends of the first waveguide and the second waveguide. The beam splitter is configured to split a received optical carrier into two optical carriers. The two optical carriers correspond to two waveguides in a one-to-one manner. The first signal electrode is located between the first waveguide and the second waveguide. The first waveguide is located between the first ground electrode and the first signal electrode. The optical modulator modulates one of the two optical carriers by using the first signal electrode and the first ground electrode, to obtain a first optical phase modulation signal. The second waveguide is located between the first signal electrode and the second signal electrode. The optical modulator modulates the other one of the two optical carriers by using the first signal electrode and the second signal electrode, to obtain a second optical phase modulation signal. The first signal electrode and the second signal electrode each are connected to an output port of a differential electrical signal. The first ground electrode is connected to a ground cable or a direct current voltage. An input end of the beam combiner is connected to output ends of the first waveguide and the second waveguide. The beam combiner is configured to perform interference on the first optical phase modulation signal and the second optical phase modulation signal, to output a modulated optical signal.

According to the invention, the first ground electrode and the second signal electrode are symmetrically distributed with the first signal electrode as a center. When the first ground electrode and the second signal electrode are asymmetrically distributed, optical losses of the two optical carriers may be different, resulting in poor quality of the modulated optical signal. Therefore, in this application, modulation quality can be improved.

In an optional manner of the first aspect, the optical modulator further includes a second ground electrode. The second signal electrode is located between the second ground electrode and the second waveguide. By introducing the second ground electrode, a structure of the optical modulator may be symmetric, thereby reducing attenuation of a high-frequency electrical signal on an electrode. Therefore, in this application, a loss of an electrical signal can be reduced, thereby increasing a modulation bandwidth.

In an optional manner of the first aspect, the second ground electrode and the first ground electrode are symmetrically distributed with the second waveguide as a center. When the second ground electrode and the first ground electrode are symmetrically distributed, attenuation of a high-frequency electrical signal on an electrode can be reduced. Therefore, in this application, a loss of an electrical signal can be reduced, thereby increasing a modulation bandwidth.

**In** an optional manner of the first aspect, the optical modulator further includes a first dummy waveguide, and the first dummy waveguide is located between the second ground electrode and the second signal electrode. By introducing the second dummy waveguide, a structure of the optical modulator may be symmetric, thereby reducing attenuation of a high-frequency electrical signal on an electrode. Therefore, in this application, a loss of an electrical signal can be reduced, thereby increasing a modulation bandwidth.

In an optional manner of the first aspect, the first waveguide and the first dummy waveguide are symmetrically distributed with the second waveguide as a center. When the first waveguide and the first dummy waveguide are symmetrically distributed, attenuation of a high-frequency electrical signal on an electrode can be reduced. Therefore, in this application, a loss of an electrical signal can be reduced, thereby increasing a modulation bandwidth.

In an optional manner of the first aspect, the optical modulator further includes an electrical connection structure, and the electrical connection structure is configured to connect the second ground electrode and the first ground electrode. The second ground electrode and the first ground electrode are connected, so that introduced noise can be reduced. Therefore, in this application, a modulation bandwidth can be increased.

In an optional manner of the first aspect, the electrical connection structure is a plurality of connection lines, and a distance between any two adjacent connection lines in the plurality of connection lines is between 100 micrometers and 500 micrometers. By using a plurality of connection lines that are distributed at intervals, noise on an electrode can be reduced, and a modulation bandwidth can be increased.

In an optional manner of the first aspect, the optical modulator further includes a first resistor and a second resistor. The first resistor is connected to an output end of the first signal electrode. The second resistor is connected to an output end of the second signal electrode. By adding the first resistor and the second resistor, reflection of an electrical signal can be reduced, thereby improving high-speed modulation performance of the optical modulator.

In an optional manner of the first aspect, the optical modulator further includes a first capacitor and a second capacitor. The first capacitor is connected to an input end of the first signal electrode. The second capacitor is connected to an input end of the second signal electrode. The first resistor and the second resistor are connected to a direct current bias voltage. By adjusting a value of the direct current bias voltage, a modulation operating point of the optical modulator may be adjusted. Therefore, in this application, modulation flexibility can be improved.

In an optional manner of the first aspect, the first resistor and the second resistor are connected to a ground cable. The first ground electrode and the second ground electrode are connected to a direct current bias voltage. By adjusting a value of the direct current bias voltage, a modulation operating point of the optical modulator may be adjusted. Therefore, in this application, modulation flexibility can be improved.

In an optional manner of the first aspect, the optical modulator is of a U-shaped structure, and the U-shaped structure includes a first straight line part, a curved part, and a second straight line part that are sequentially connected. In the first straight line part, the first waveguide is located between the first ground electrode and the first signal electrode, and the second waveguide is located between the first signal electrode and the second signal electrode. In the second straight line part, the first waveguide is located between the first signal electrode and the second signal electrode, and the second waveguide is located between the second signal electrode and the second ground electrode. In this case, the first waveguide and the second waveguide may not need to be crossed in the curved part. Two optical phase modulation signals affect each other due to crossed waveguides, consequently reducing modulation quality. Therefore, in this application, modulation quality can be improved.

In an optional manner of the first aspect, the optical modulator further includes a second dummy waveguide, and in the second straight line part, the second dummy waveguide is located between the first ground electrode and the first signal electrode. By introducing the second dummy waveguide, a structure of the optical modulator in the second straight line part can be more symmetric, thereby increasing a modulation bandwidth. In addition, the second dummy waveguide does not cross the first waveguide or the second waveguide, thereby improving modulation quality.

A second aspect of this application provides an optical module. The optical module includes a laser and the optical modulator according to the first aspect or any optional manner of the first aspect. The laser is configured to output an optical carrier to the optical modulator. The optical modulator is configured to modulate the optical carrier, to output a modulated optical signal.

A third aspect of this application provides an optical sending device. The optical sending device includes a processor and the optical module according to the second aspect. The processor is configured to output a differential electrical signal to the optical module. The optical module is configured to modulate an optical carrier based on the differential electrical signal, to output a modulated optical signal.

A fourth aspect of this application provides an optical communication system. The optical communication system includes an optical receiving device and the optical sending device according to the third aspect. The optical sending device is configured to send a modulated optical signal to the optical receiving device. The optical receiving device is configured to demodulate the modulated optical signal, to obtain an electrical signal.

A fifth aspect of this application provides a modulation method. The modulation method may be applied to an optical sending device. The modulation method includes the following steps: The optical sending device modulates a phase of a first optical carrier by using one electrical signal in a differential electrical signal, to obtain a first optical phase modulation signal. The optical sending device modulates a phase of a second optical carrier by using two electrical signals in the differential electrical signal, to obtain a second optical phase modulation signal. The optical sending device performs interference on the first optical phase modulation signal and the second optical phase modulation signal, to obtain a modulated optical signal.

### BRIEF DESCRIPTION OF DRAWINGS

FIG. 1 is a diagram of a first structure of an optical modulator according to an embodiment of this application;
FIG. 2 is a diagram of a second structure of an optical modulator according to an embodiment of this application;
FIG. 3a is a diagram of a third structure of an optical modulator according to an embodiment of this application;
FIG. 3b is a diagram of a first cross section of an optical modulator according to an embodiment of this application;
FIG. 3c is a diagram of a second cross section of an optical modulator according to an embodiment of this application;
FIG. 3d is a diagram of a third cross section of an optical modulator according to an embodiment of this application;
FIG. 3e is a diagram of a fourth cross section of an optical modulator according to an embodiment of this application;
FIG. 4 is a diagram of a fourth structure of an optical modulator according to an embodiment of this application;
FIG. 5 is a diagram of a fifth structure of an optical modulator according to an embodiment of this application;
FIG. 6 is a diagram of a sixth structure of an optical modulator according to an embodiment of this application;
FIG. 7 is a diagram of a seventh structure of an optical modulator according to an embodiment of this application;
FIG. 8 is a diagram of an eighth structure of an optical modulator according to an embodiment of this application;
FIG. 9 is a diagram of a structure of an optical module according to an embodiment of this application;
FIG. 10 is a diagram of a structure of an optical sending device according to an embodiment of this application;
FIG. 11 is a diagram of a structure of an optical communication system according to an embodiment of this application; and
FIG. 12 is a schematic flowchart of a modulation method according to an embodiment of this application.

### DESCRIPTION OF EMBODIMENTS

This application provides an optical modulator and a modulation method. By adding a signal electrode, a voltage amplitude of modulation can be increased, thereby improving modulation efficiency. It should be understood that "first", "second", and the like used in this application are merely used for distinguishing and description, but should not be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

An optical modulator provided in this application is used in the field of optical communication. In the field of optical communication, an optical sending device may convert an electrical signal into an optical signal by using the optical modulator. Specifically, the optical modulator modulates an optical carrier by using one electrical signal of a differential electrical signal, to obtain a modulated optical signal. However, the other end of the differential electrical signal is cut off. This causes a waste of a drive signal, and consequently causes low modulation efficiency of the optical modulator.

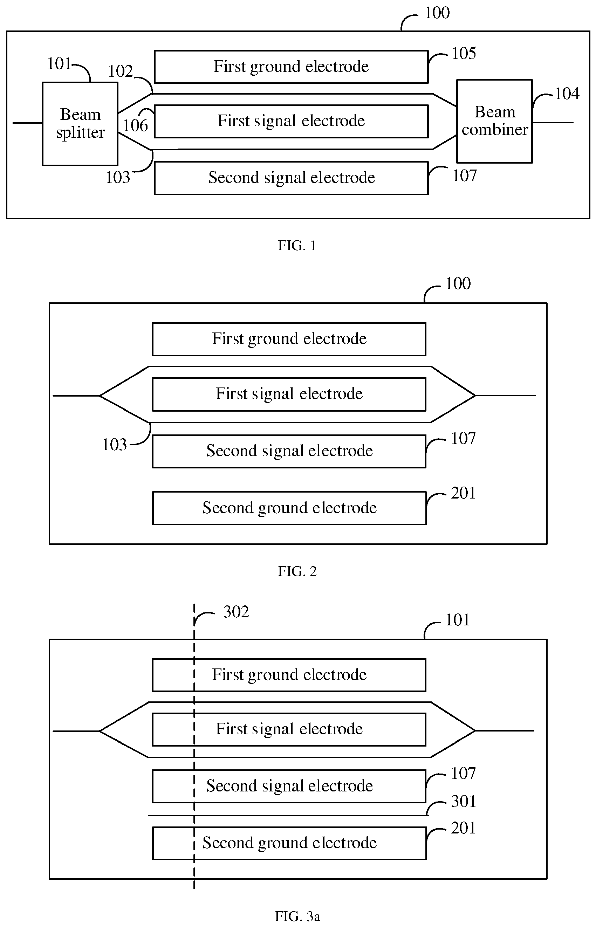

Therefore, this application provides an optical modulator. FIG. 1 is a diagram of a first structure of an optical modulator according to an embodiment of this application. As shown in FIG. **1****,** the optical modulator 100 includes a beam splitter 101, a first waveguide 102, a second waveguide 103, a beam combiner 104, a first ground electrode 105, a first signal electrode 106, and a second signal electrode 107. An output end of the beam splitter 101 is connected to input ends of the first waveguide 102 and the second waveguide 103. The beam splitter 101 is configured to split a received optical carrier into two optical carriers. The two optical carriers correspond to two waveguides in a one-to-one manner. The two waveguides include the first waveguide 102 and the second waveguide 103. The first waveguide 102 may also be referred to as an upper waveguide. The second waveguide 103 may also be referred to as a lower waveguide. The first signal electrode 106 is located between the first waveguide 102 and the second waveguide 103. The first waveguide 102 is located between the first ground electrode 105 and the first signal electrode 106. The optical modulator 100 modulates one of the two optical carriers by using the first ground electrode 105 and the first signal electrode 106, to obtain a first optical phase modulation signal. The second waveguide 103 is located between the first signal electrode 106 and the second signal electrode 107. The optical modulator 100 modulates the other one of the two optical carriers by using the first signal electrode 106 and the second signal electrode 107, to obtain a second optical phase modulation signal. The first signal electrode 106 and the second signal electrode 107 each are connected to an output port of a differential electrical signal. The first ground electrode 105 is connected to a ground cable or a direct current voltage. An input end of the beam combiner 104 is connected to output ends of the first waveguide 102 and the second waveguide 103. The beam combiner 104 is configured to perform interference on the first optical phase modulation signal and the second optical phase modulation signal, to output a modulated optical signal.

An output amplitude of the differential electrical signal is defined as 2A, that is, an amplitude of a single-ended electrical signal is A. In this case, a drive voltage of the first waveguide 102 is A. A drive voltage of the second waveguide 103 is 2A. An overall drive voltage of the optical modulator 100 is 3A. Therefore, by adding a signal electrode, a voltage amplitude of modulation can be increased, thereby improving modulation efficiency.

A distance between the first ground electrode 105 and the first signal electrode 106 is defined as d1. A distance between the first signal electrode 106 and the second signal electrode 107 is defined as d2. In actual application, d1 and d2 affect optical losses of the two optical carriers. When the optical losses of the two optical carriers are different, quality of the modulated optical signal is affected. To improve modulation quality, the first ground electrode 105 and the second signal electrode 107 are symmetrically distributed with the first signal electrode 106 as a center. The symmetric distribution means that a difference between d1 and d2 is less than 5 micrometers. Similarly, in a subsequent example, when A and B are described as being symmetrically distributed with C as a center, it means that a difference between a distance between A and C and a distance between B and C is less than 5 micrometers.

It should be understood that the first ground electrode 105 and the first signal electrode 106 may not be completely parallel. Distances between the first ground electrode 105 at different locations and the first signal electrode 106 may be different. In this case, d1 is an average distance between the first ground electrode 105 and the first signal electrode 106. Similarly, when the first ground electrode 105 is not completely parallel to the first signal electrode 106, d2 is an average distance between the first signal electrode 106 and the second signal electrode 107.

In actual application, when the structure of the optical modulator 100 is asymmetric, attenuation of a high-frequency signal on an electrode may be increased, consequently increasing a loss of an electrical signal. Therefore, the optical modulator 100 in embodiments of this application may further include a second ground electrode. FIG. 2 is a diagram of a second structure of an optical modulator according to an embodiment of this application. As shown in FIG. 2, based on FIG. **1****,** the optical modulator 100 further includes a second ground electrode 201. The second signal electrode 107 is located between the second ground electrode 201 and the second waveguide 103. The second ground electrode 201 is connected to a ground cable or a direct current voltage. By introducing the second ground electrode 201, the structure of the optical modulator 100 may be symmetric, thereby reducing a loss of an electrical signal. It should be understood that, for brevity of the accompanying drawings, some existing reference signs in FIG. 1 are omitted in FIG. 2. Similarly, in a subsequent example, some existing reference signs in referenced accompanying drawings may be omitted in the referenced accompanying drawings.

To further improve symmetry of the optical modulator 100, the optical modulator 100 in embodiments of this application may further include a first dummy waveguide. FIG. 3a is a diagram of a third structure of an optical modulator according to an embodiment of this application. As shown in FIG. 3a, based on FIG. 2, the optical modulator 100 further includes a first dummy waveguide 301. The first dummy waveguide 301 is located between the second ground electrode 201 and the second signal electrode 107. The first dummy waveguide 301 does not need to transmit an optical carrier. By introducing the first dummy waveguide 301, the structure of the optical modulator 100 may be symmetric, thereby reducing a loss of an electrical signal.

Symmetry of the optical modulator 100 is increased, so that a loss of an electrical signal is reduced, and a modulation bandwidth is increased. Therefore, in this embodiment, the second ground electrode 201 and the first ground electrode 105 may be symmetrically distributed with the second waveguide 103 as a center, and/or the first waveguide 102 and the first dummy waveguide 301 may be symmetrically distributed with the second waveguide 103 as a center.

In this embodiment of this application, the first waveguide 102 and the second waveguide 103 may be strip optical waveguides or ridge optical waveguides. This is described separately below.

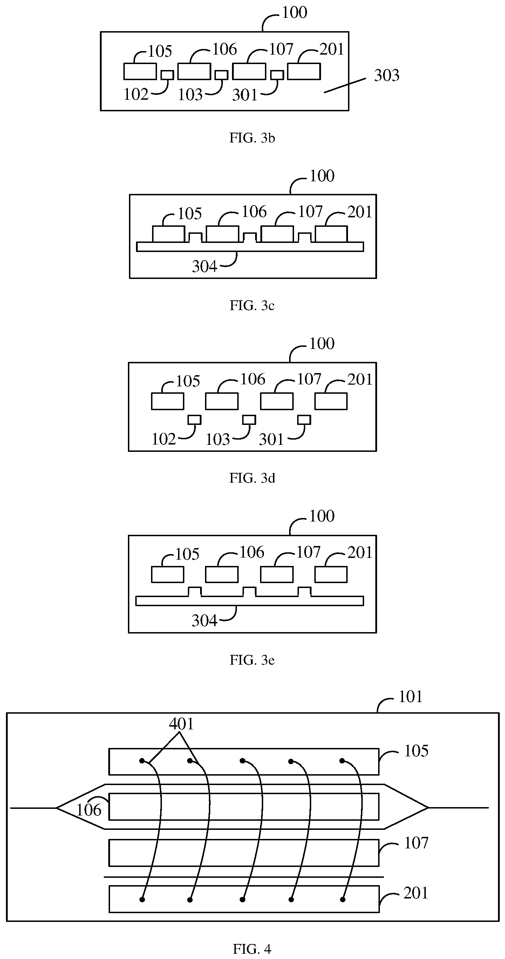

FIG. 3b is a diagram of a first cross section of the optical modulator according to an embodiment of this application. FIG. 3b is obtained by sectioning along a dashed line 302 in FIG. 3a. As shown in FIG. 3b, the optical modulator 100 includes three waveguides and four electrodes. The four electrodes include the first ground electrode 105, the first signal electrode 106, the second signal electrode 107, and the second ground electrode 201. The three waveguides include the first waveguide 102, the second waveguide 103, and the first dummy waveguide 301. The three waveguides are all strip optical waveguides. The optical modulator 100 may also fill a vacant position with silicon dioxide SiO₂ 303 or another dielectric layer material.

FIG. 3c is a diagram of a second cross section of the optical modulator according to an embodiment of this application. FIG. 3c is obtained by sectioning along the dashed line 302 in FIG. 3a. As shown in FIG. 3c, the optical modulator 100 includes a waveguide 304 and four electrodes. The four electrodes include the first ground electrode 105, the first signal electrode 106, the second signal electrode 107, and the second ground electrode 201. The waveguide 304 is a ridge optical waveguide. The waveguide 304 includes three protruding waveguides. The three protruding waveguides include the first waveguide 102, the second waveguide 103, and the first dummy waveguide 301.

In FIG. 3b and FIG. 3c, the waveguide and the electrode are located at a same layer. In actual application, the waveguide and the electrode may be located at different layers. FIG. 3d is a diagram of a third cross section of the optical modulator according to an embodiment of this application. Based on FIG. 3b, the optical modulator 100 shown in FIG. 3d may be obtained by moving down the three waveguides. In this case, the three waveguides and the four electrodes are located at different layers. FIG. 3e is a diagram of a fourth cross section of the optical modulator according to an embodiment of this application. Based on FIG. 3c, the optical modulator 100 shown in FIG. 3e may be obtained by moving down the waveguide 304. In this case, the waveguide 304 and the four electrodes are located at different layers. The three protruding waveguides on the waveguide 304 and the four electrodes are also located at different layers.

In actual application, the first ground electrode 105 and the second ground electrode 201 may introduce noise. Noise affects modulation quality. Therefore, in this embodiment of this application, the optical modulator 100 may further include an electrical connection structure. The electrical connection structure is configured to connect the second ground electrode 201 and the first ground electrode 105. FIG. 4 is a diagram of a fourth structure of an optical modulator according to an embodiment of this application. As shown in FIG. 4, based on FIG. 3a, the optical modulator 100 further includes an electrical connection structure 401. The electrical connection structure 401 is a plurality of connection lines. Two ends of each of the plurality of connection lines are respectively connected to the first ground electrode 105 and the second ground electrode 201. A distance between any two adjacent connection lines in the plurality of connection lines is between 100 micrometers and 500 micrometers. The second ground electrode 201 and the first ground electrode 105 are connected, so that introduced noise can be reduced. Therefore, in this embodiment of this application, a modulation bandwidth can be increased.

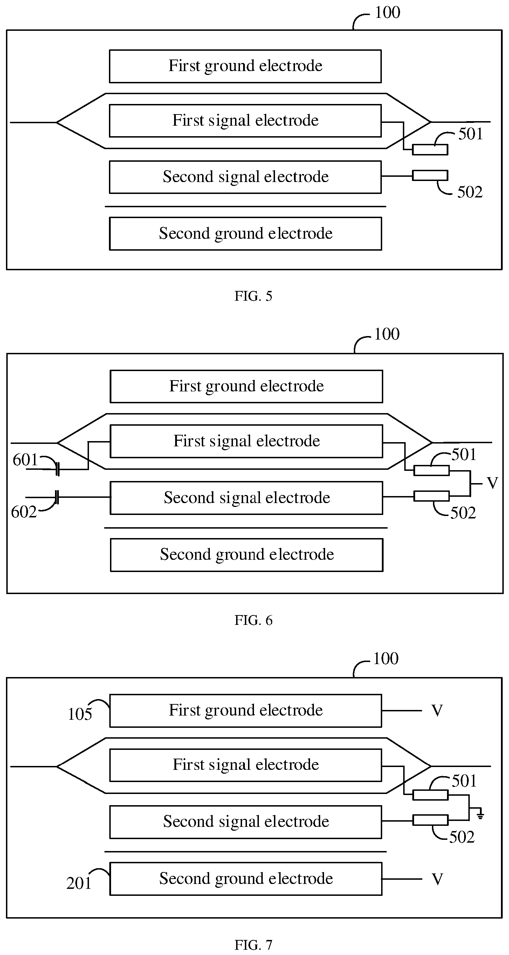

It can be learned from the foregoing description of FIG. 1 that an input end of the first signal electrode 106 is configured to connect to one output port of the differential electrical signal. An input end of the second signal electrode 107 is configured to connect to the other output port of the differential electrical signal. In actual application, an electrical signal may be reflected back from an output end of a signal electrode to the signal electrode, thereby affecting high-speed modulation performance of the optical modulator 100. Therefore, in this embodiment of this application, the optical modulator 100 may further include a first resistor and a second resistor. FIG. 5 is a diagram of a fifth structure of an optical modulator according to an embodiment of this application. As shown in FIG. 5, based on FIG. 3a, the optical modulator 100 further includes a first resistor 501 and a second resistor 502. The first resistor 501 is connected to an output end of the first signal electrode 106. The second resistor 502 is connected to an output end of the second signal electrode 107. The first resistor 501 and the second resistor 502 may also be referred to as cut-off resistors or termination resistors (TRs). By adding the first resistor 501 and the second resistor 502, reflection of an electrical signal can be reduced, thereby improving high-speed modulation performance of the optical modulator 100.

It can be learned from the foregoing description of FIG. 5 that one end of the first resistor 501 is connected to the output end of the first signal electrode 106. One end of the second resistor 502 is connected to the output end of the second signal electrode 107. In actual application, the other end of the first resistor 501 and/or the other end of the second resistor 502 may be connected to different locations. This is described separately below.

In a first example, the other end of the first resistor 501 and the other end of the second resistor 502 are separately grounded, or the other end of the first resistor 501 and the other end of the second resistor 502 are connected in parallel and then grounded. In a second example, the other end of the first resistor 501 is connected to the other end of the second resistor 502. In a third example, the other end of the first resistor 501 is connected to the first ground electrode 105. The other end of the second resistor 502 is connected to the second ground electrode 201.

In actual application, to improve modulation flexibility, the optical modulator 100 may further be connected to a direct current bias voltage. By adjusting a value of the direct current bias voltage, a modulation operating point of the optical modulator 100 may be adjusted. The following separately describes two possible implementations.

FIG. 6 is a diagram of a sixth structure of an optical modulator according to an embodiment of this application. As shown in FIG. 6, based on FIG. 5, the optical modulator 100 further includes a first capacitor 601 and a second capacitor 602. One end of the first capacitor 601 is connected to one end of the differential electrical signal. The other end of the first capacitor 601 is connected to the input end of the first signal electrode 106. One end of the second capacitor 602 is connected to the other end of the differential electrical signal. The other end of the second capacitor 602 is connected to the input end of the second signal electrode 107. The output end of the first signal electrode 106 is connected to the first resistor 501. The output end of the second signal electrode 107 is connected to the second resistor 502. The first resistor 501 and the second resistor 502 are connected to a direct current bias voltage. The first capacitor 601 and the second capacitor 602 are configured to isolate the direct current bias voltage.

FIG. 7 is a diagram of a seventh structure of an optical modulator according to an embodiment of this application. As shown in FIG. 7, based on FIG. 5, the first ground electrode 105 and the second ground electrode 201 are connected to a direct current bias voltage. One end of the first resistor 501 is connected to the output end of the first signal electrode 106. The other end of the first resistor 501 is connected to a ground cable. One end of the second resistor 502 is connected to the output end of the second signal electrode 107. The other end of the second resistor 502 is connected to a ground cable.

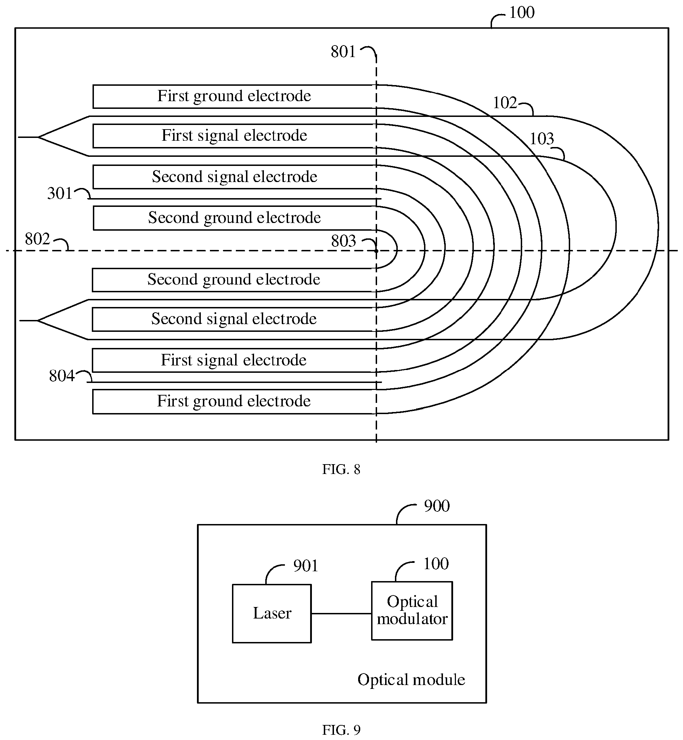

In actual application, to reduce a length of the optical modulator, the optical modulator may be of a U-shaped structure. FIG. 8 is a diagram of an eighth structure of an optical modulator according to an embodiment of this application. As shown in FIG. 8, the optical modulator 100 is of a U-shaped structure. The U-shaped structure includes a straight line part and a curved part. The curved part is a part of the optical modulator 100 from a dashed line 801 to the right. The straight line part is a part of the optical modulator 100 from the dashed line 801 to the left. The straight line part includes a first straight line part and a second straight line part. The first straight line part is a part of the straight line part that is above a dashed line 802. The second straight line part is a part of the straight line part that is below the dashed line 802. The following separately describes the three parts of the optical modulator 100.

In the first straight line part, the optical modulator 100 includes three waveguides and four electrodes. The four electrodes sequentially include the first ground electrode 105, the first signal electrode 106, the second signal electrode 107, and the second ground electrode 201 along a top-to-bottom direction. The three waveguides sequentially include the first waveguide 102, the second waveguide 103, and the first dummy waveguide 301 along a top-to-bottom direction. The first waveguide 102 is located between the first ground electrode 105 and the first signal electrode 106. The second waveguide 103 is located between the first signal electrode 106 and the second signal electrode 107. The first dummy waveguide 301 is located between the second signal electrode 107 and the second ground electrode 201. For a description of the first straight line part, refer to the foregoing description of FIG. 3a.

In the curved part, the optical modulator 100 includes two waveguides and four electrodes. The four electrodes sequentially include the second ground electrode 201, the second signal electrode 107, the first signal electrode 106, and the first ground electrode 105 from inside to outside along a center 803. The two waveguides sequentially include the second waveguide 103 and the first waveguide 102 from inside to outside along the center 803. To avoid the waveguide and the electrode from crossing, the waveguide and the electrode may be located at different layers.

In the second straight line part, the optical modulator 100 includes three waveguides and four electrodes. The four electrodes are sequentially the second ground electrode 201, the second signal electrode 107, the first signal electrode 106, and the first ground electrode 105 along a top-to-bottom direction. The three waveguides are sequentially the second waveguide 103, the first waveguide 102, and a second dummy waveguide 804 along a top-to-bottom direction. The second waveguide 103 is located between the second ground electrode 201 and the second signal electrode 107. The first waveguide 102 is located between the second signal electrode 107 and the first signal electrode 106. The second dummy waveguide 804 is located between the first signal electrode 106 and the first ground electrode 105. The second dummy waveguide 804 does not need to transmit an optical carrier. For descriptions of output ends of the first signal electrode 106, the second signal electrode 107, the first ground electrode 105, and the second ground electrode 201, refer to descriptions in any one of FIG. 4 to FIG. 7. For example, the output end of the first signal electrode 106 is connected to the first resistor. The output end of the second signal electrode 107 is connected to the second resistor.

In actual application, two optical phase modulation signals affect each other due to crossed waveguides, consequently reducing modulation quality. In FIG. 8, the first waveguide 102 and the second waveguide 103 of the optical modulator 100 may not need to cross each other. Therefore, in this embodiment of this application, modulation quality can be improved. In addition, by introducing the second dummy waveguide 804, symmetry of the second straight line part can be improved, thereby reducing a loss of an electrical signal.

It should be understood that FIG. 1 to FIG. 8 are merely a plurality of examples of the optical modulator 100 provided in embodiments of this application. In actual application, a person skilled in the art may adaptively modify the structure of the optical modulator 100 based on a requirement. For example, in FIG. 5 and FIG. 6, the optical modulator 100 may not include the second ground electrode 201 and the first dummy waveguide 301. For another example, in FIG. 7, the optical modulator 100 further includes an electrical connection structure. The electrical connection structure is configured to connect the first ground electrode 105 and the second ground electrode 201. For another example, the optical modulator 100 in FIG. 8 does not include the first ground electrode 105 and the second dummy waveguide 804 in the second straight line part.

The foregoing describes the optical modulator provided in embodiments of this application. The following describes an optical module, an optical sending device, and an optical communication system provided in embodiments of this application.

FIG. 9 is a diagram of a structure of an optical module according to an embodiment of this application. As shown in FIG. 9, the optical module 900 includes a laser 901 and an optical modulator 100. The laser 901 is configured to output an optical carrier to the optical modulator 100. The optical modulator 100 is configured to modulate the optical carrier, to output a modulated optical signal. For a description of the optical modulator 100, refer to the foregoing description in any one of FIG. 1 to FIG. 8. For example, the optical modulator 100 includes a beam splitter 101. The optical modulator 100 splits an optical carrier into two optical carriers by using the beam splitter 101. The optical modulator 100 modulates a phase of a first optical carrier by using one electrical signal in a differential electrical signal, to obtain a first optical phase modulation signal. The optical modulator 100 modulates a phase of a second optical carrier by using two electrical signals in the differential electrical signal, to obtain a second optical phase modulation signal. The optical modulator 100 performs interference on the first optical phase modulation signal and the second optical phase modulation signal by using a beam combiner 104, to obtain a modulated optical signal.

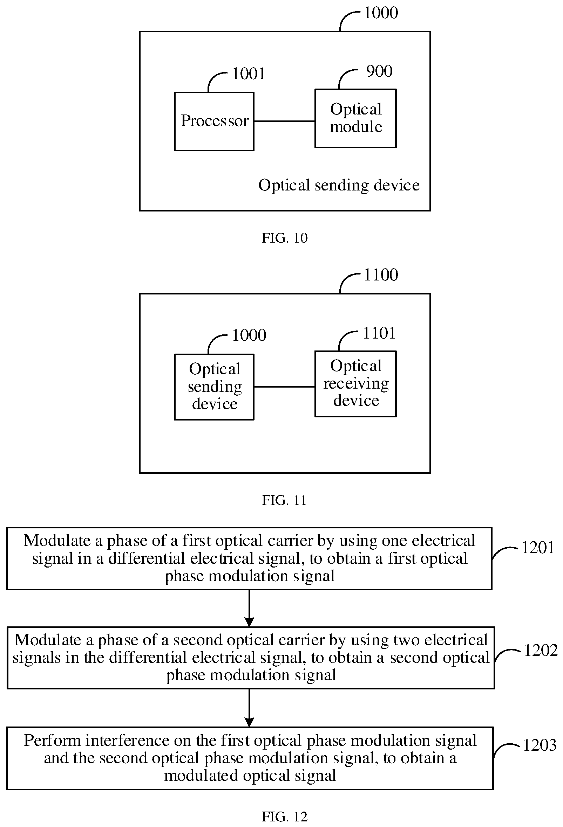

FIG. 10 is a diagram of a structure of an optical sending device according to an embodiment of this application. As shown in FIG. 10, the optical sending device 1000 includes a processor 1001 and an optical module 900. The processor 1001 may be a central processing unit (CPU), a network processor (NP), or a combination of a CPU and an NP. The processor 1001 may alternatively be an image processing unit (GPU). The processor 1001 may further include a hardware chip or another general-purpose processor. The foregoing hardware chip may be an application-specific integrated circuit (ASIC), a programmable logic device (PLD), or a combination thereof. The processor 1001 is configured to output a differential electrical signal to the optical module 900. The optical module 900 is configured to modulate an optical carrier based on the differential electrical signal, to output a modulated optical signal. For a description of the optical module 900, refer to the description in FIG. 9.

In actual application, the optical sending device 1000 may further include a memory. The memory may be a volatile memory or a non-volatile memory, or may include both a volatile memory and a non-volatile memory. The non-volatile memory may be a read-only memory (ROM), a programmable read-only memory (programmable ROM, PROM), an erasable programmable read-only memory (erasable PROM, EPROM), a flash memory, or the like. The volatile memory may be a random access memory (RAM). The memory is connected to the processor 1001. The memory may store data. The processor 1001 may be configured to obtain data from the memory, and obtain a differential electrical signal based on the data.

In actual application, the optical sending device 1000 may further include an optical detector, a trans-impedance amplifier, a driver (DRV), or the like. The optical detector is configured to: receive an optical signal, and convert the optical signal into an electrical signal. The trans-impedance amplifier is configured to: convert a current signal output by the optical detector into a voltage signal, and amplify a signal amplitude. The driver is configured to: receive the differential electrical signal from the processor, amplify a signal amplitude of the differential electrical signal, and output the amplified differential electrical signal by using two output ports. An optical modulator is connected to the driver. Specifically, each of a first signal electrode and a second signal electrode in the optical modulator is connected to one of the two output ports.

FIG. 11 is a diagram of a structure of an optical communication system according to an embodiment of this application. As shown in FIG. 11, the optical communication system 1100 includes an optical receiving device 1101 and an optical sending device 1000. The optical sending device 1000 is configured to send a modulated optical signal to the optical receiving device 1101. For a description of the optical sending device 1000, refer to the description of FIG. 10. The optical receiving device 1101 is configured to demodulate the modulated optical signal, to obtain an electrical signal. It should be understood that the optical receiving device 1101 may also modulate an optical carrier based on a differential electrical signal, to obtain a modulated optical signal. Therefore, for a description of the optical receiving device 1101, refer to the description of the optical sending device 1000.

FIG. 12 is a schematic flowchart of a modulation method according to an embodiment of this application. The modulation method may be applied to an optical modulator, an optical module, or an optical sending device. The following describes the modulation method by using an optical modulator as an example. The modulation method includes the following steps.

In step 1201, the optical modulator modulates a phase of a first optical carrier by using one electrical signal in a differential electrical signal, to obtain a first optical phase modulation signal.

For a description of the optical modulator, refer to the foregoing description in any one of FIG. 1 to FIG. 8. For example, the optical modulator includes a first ground electrode and a first signal electrode. A first waveguide is included between the first ground electrode and the first signal electrode. The first waveguide is configured to transmit the first optical carrier. The first signal electrode is configured to connect to one end of the differential electrical signal. The modulator modulates one of the two optical carriers by using the first ground electrode and the first signal electrode, to obtain the first optical phase modulation signal.

In step 1202, the optical modulator modulates a phase of a second optical carrier by using two electrical signals in the differential electrical signal, to obtain a second optical phase modulation signal.

The optical modulator includes the first signal electrode and a second signal electrode. The second signal electrode is configured to connect to the other end of the differential electrical signal. A second waveguide is included between the first signal electrode and the second signal electrode. The second waveguide is configured to transmit the second optical carrier. The optical modulator modulates the other one of the two optical carriers by using the first signal electrode and the second signal electrode, to obtain the second optical phase modulation signal.

In step 1203, the optical modulator performs interference on the first optical phase modulation signal and the second optical phase modulation signal, to obtain a modulated optical signal.

The optical modulator includes a beam combiner. The optical modulator performs interference on the first optical phase modulation signal and the second optical phase modulation signal by using the beam combiner, to obtain the modulated optical signal.

## Claims

1. An optical modulator (100), comprising a beam splitter (101), a first ground electrode (105), a first waveguide (102), a first signal electrode (106), a second waveguide (103), a second signal electrode (107), and a beam combiner (104), wherein
an output end of the beam splitter (101) is connected to input ends of the first waveguide (102) and the second waveguide (103), and an input end of the beam combiner (104) is connected to output ends of the first waveguide (102) and the second waveguide (103);
the first signal electrode (106) is located between the first waveguide (102) and the second waveguide (103);
the first waveguide (102) is located between the first ground electrode (105) and the first signal electrode (106); and
the second waveguide (103) is located between the first signal electrode (106) and the second signal electrode (107),
**characterized in that** the first ground electrode (105) and the second signal electrode (107) are symmetrically distributed with the first signal electrode (106) as a center.

2. The optical modulator (100) according to claim 1, wherein the optical modulator (100) further comprises a second ground electrode (201), and the second signal electrode (107) is located between the second ground electrode (201) and the second waveguide (103).

3. The optical modulator (100) according to claim 2, wherein the second ground electrode (201) and the first ground electrode (105) are symmetrically distributed with the second waveguide (103) as a center.

4. The optical modulator (100) according to claim 2 or 3, wherein the optical modulator (100) further comprises a first dummy waveguide (301), and the first dummy waveguide (301) is located between the second ground electrode (201) and the second signal electrode (107).

5. The optical modulator (100) according to claim 4, wherein the first waveguide (102) and the first dummy waveguide (301) are symmetrically distributed with the second waveguide (103) as a center.

6. The optical modulator (100) according to any one of claims 2 to 5, wherein the optical modulator (100) further comprises an electrical connection structure (401), and the electrical connection structure (401) is configured to connect the second ground electrode (201) and the first ground electrode (105).

7. The optical modulator (100) according to claim 6, wherein the electrical connection structure (401) is a plurality of connection lines, and a distance between any two adjacent connection lines in the plurality of connection lines is between 100 micrometers and 500 micrometers.

8. The optical modulator (100) according to any one of claims 2 to 7, wherein the optical modulator (100) further comprises a first resistor (501) and a second resistor (502), wherein
the first resistor (501) is connected to an output end of the first signal electrode (106); and
the second resistor (502) is connected to an output end of the second signal electrode (107).

9. The optical modulator (100) according to claim 8, wherein the optical modulator (100) further comprises a first capacitor (601) and a second capacitor (602), wherein
the first capacitor (601) is connected to an input end of the first signal electrode (106);
the second capacitor (602) is connected to an input end of the second signal electrode (107); and
the first resistor (501) and the second resistor (502) are connected to a direct current bias voltage.

10. The optical modulator (100) according to claim 8, wherein
the first resistor (501) and the second resistor (502) are connected to a ground cable; and
the first ground electrode (105) and the second ground electrode (201) are connected to a direct current bias voltage.

11. The optical modulator (100) according to any one of claims 2 to 10, wherein the optical modulator (100) is of a U-shaped structure, and the U-shaped structure comprises a first straight line part, a curved part, and a second straight line part that are sequentially connected;
that the first waveguide (102) is located between the first ground electrode (105) and the first signal electrode (106) comprises: in the first straight line part, the first waveguide (102) is located between the first ground electrode (105) and the first signal electrode (106);
that the second waveguide (103) is located between the first signal electrode (106) and the second signal electrode (107) comprises: in the first straight line part, the second waveguide (103) is located between the first signal electrode (106) and the second signal electrode (107); and
in the second straight line part, the first waveguide (102) is located between the first signal electrode (106) and the second signal electrode (107), and the second waveguide (103) is located between the second signal electrode (107) and the second ground electrode (201).

12. The optical modulator (100) according to claim 11, wherein the optical modulator (100) further comprises a second dummy waveguide (804), and in the second straight line part, the second dummy waveguide (804) is located between the first ground electrode (105) and the first signal electrode (106).

13. An optical module (900), comprising a laser (901) and the optical modulator (100) according to any one of claims 1 to 12, wherein the laser (901) is configured to output an optical carrier to the optical modulator (100); and the optical modulator (100) is configured to modulate the optical carrier to output a modulated optical signal.

14. An optical sending device (1000), comprising a processor (1001) and the optical module (900) according to claim 13, wherein the processor (1001) is configured to output a differential electrical signal to the optical module (900); andthe optical module (900) is configured to modulate an optical carrier based on the differential electrical signal to output a modulated optical signal.

## Patentansprüche

1. Optischer Modulator (100), der einen Strahlteiler (101), eine erste Masseelektrode (105), einen ersten Wellenleiter (102), eine erste Signalelektrode (106), einen zweiten Wellenleiter (103), eine zweite Signalelektrode (107) und einen Strahlkombinierer (104) umfasst, wobei
ein Ausgangsende des Strahlteilers (101) mit Eingangsenden des ersten Wellenleiters (102) und des zweiten Wellenleiters (103) verbunden ist, und ein Eingangsende des Strahlkombinierers (104) mit Ausgangsenden des ersten Wellenleiters (102) und des zweiten Wellenleiters (103) verbunden ist;
die erste Signalelektrode (106) sich zwischen dem ersten Wellenleiter (102) und dem zweiten Wellenleiter (103) befindet;
der erste Wellenleiter (102) sich zwischen der ersten Masseelektrode (105) und der ersten Signalelektrode (106) befindet; und
der zweite Wellenleiter (103) sich zwischen der ersten Signalelektrode (106) und der zweiten Signalelektrode (107) befindet,
**dadurch gekennzeichnet, dass** die erste Masseelektrode (105) und die zweite Signalelektrode (107) symmetrisch um die erste Signalelektrode (106) als Mittelpunkt verteilt sind.

2. Optischer Modulator (100) nach Anspruch 1, wobei der optische Modulator (100) ferner eine zweite Masseelektrode (201) umfasst, und die zweite Signalelektrode (107) sich zwischen der zweiten Masseelektrode (201) und dem zweiten Wellenleiter (103) befindet.

3. Optischer Modulator (100) nach Anspruch 2, wobei die zweite Masseelektrode (201) und die erste Masseelektrode (105) symmetrisch um den zweiten Wellenleiter (103) als Mittelpunkt verteilt sind.

4. Optischer Modulator (100) nach Anspruch 2 oder 3, wobei der optische Modulator (100) ferner einen ersten Dummy-Wellenleiter (301) umfasst, und der erste Dummy-Wellenleiter (301) sich zwischen der zweiten Masseelektrode (201) und der zweiten Signalelektrode (107) befindet.

5. Optischer Modulator (100) nach Anspruch 4, wobei der erste Wellenleiter (102) und der erste Dummy-Wellenleiter (301) symmetrisch um den zweiten Wellenleiter (103) als Mittelpunkt verteilt sind.

6. Optischer Modulator (100) nach einem der Ansprüche 2 bis 5, wobei der optische Modulator (100) ferner eine elektrische Verbindungsstruktur (401) umfasst, und die elektrische Verbindungsstruktur (401) konfiguriert ist, um die zweite Masseelektrode (201) und die erste Masseelektrode (105) zu verbinden.

7. Optischer Modulator (100) nach Anspruch 6, wobei die elektrische Verbindungsstruktur (401) eine Vielzahl von Verbindungsleitungen ist, und ein Abstand zwischen zwei beliebigen benachbarten Verbindungsleitungen in der Vielzahl von Verbindungsleitungen zwischen 100 Mikrometern und 500 Mikrometern beträgt.

8. Optischer Modulator (100) nach einem der Ansprüche 2 bis 7, wobei der optische Modulator (100) ferner einen ersten Widerstand (501) und einen zweiten Widerstand (502) umfasst, wobei
der erste Widerstand (501) mit einem Ausgangsende der ersten Signalelektrode (106) verbunden ist; und der zweite Widerstand (502) mit einem Ausgangsende der zweiten Signalelektrode (107) verbunden ist.

9. Optischer Modulator (100) nach Anspruch 8, wobei der optische Modulator (100) ferner einen ersten Kondensator (601) und einen zweiten Kondensator (602) umfasst, wobei der erste Kondensator (601) mit einem Eingangsende der ersten Signalelektrode (106) verbunden ist;
der zweite Kondensator (602) mit einem Eingangsende der zweiten Signalelektrode (107) verbunden ist; und
der erste Widerstand (501) und der zweite Widerstand (502) mit einer Gleichstrom-Vorspannung verbunden sind.

10. Optischer Modulator (100) nach Anspruch 8, wobei
der erste Widerstand (501) und der zweite Widerstand (502) mit einem Massekabel verbunden sind; und
die erste Masseelektrode (105) und die zweite Masseelektrode (201) mit einer Gleichstrom-Vorspannung verbunden sind.

11. Optischer Modulator (100) nach einem der Ansprüche 2 bis 10, wobei der optische Modulator (100) eine U-förmige Struktur aufweist, und die U-förmige Struktur einen ersten geraden Teil, einen gekrümmten Teil und einen zweiten geraden Teil umfasst, die nacheinander verbunden sind;
dass der erste Wellenleiter (102) sich zwischen der ersten Masseelektrode (105) und der ersten Signalelektrode (106) befindet, umfasst: in dem ersten geraden Teil befindet sich der erste Wellenleiter (102) zwischen der ersten Masseelektrode (105) und der ersten Signalelektrode (106);
dass der zweite Wellenleiter (103) sich zwischen der ersten Signalelektrode (106) und der zweiten Signalelektrode (107) befindet, umfasst: in dem ersten geraden Teil befindet sich der zweite Wellenleiter (103) zwischen der ersten Signalelektrode (106) und der zweiten Signalelektrode (107); und
in dem zweiten geraden Teil befindet sich der erste Wellenleiter (102) zwischen der ersten Signalelektrode (106) und der zweiten Signalelektrode (107), und der zweite Wellenleiter (103) befindet sich zwischen der zweiten Signalelektrode (107) und der zweiten Masseelektrode (201).

12. Optischer Modulator (100) nach Anspruch 11, wobei der optische Modulator (100) ferner einen zweiten Dummy-Wellenleiter (804) umfasst, und der zweite Dummy-Wellenleiter (804) sich in dem zweiten geraden Teil zwischen der ersten Masseelektrode (105) und der ersten Signalelektrode (106) befindet.

13. Optisches Modul (900), das einen Laser (901) und den optischen Modulator (100) nach einem der Ansprüche 1 bis 12 umfasst, wobei der Laser (901) konfiguriert ist, um einen optischen Träger an den optischen Modulator (100) auszugeben; und der optische Modulator (100) konfiguriert ist, um den optischen Träger zu modulieren, um ein moduliertes optisches Signal auszugeben.

14. Optische Sendevorrichtung (1000), die einen Prozessor (1001) und das optische Modul (900) nach Anspruch 13 umfasst, wobei der Prozessor (1001) konfiguriert ist, um ein differentielles elektrisches Signal an das optische Modul (900) auszugeben; und das optische Modul (900) konfiguriert ist, um basierend auf dem differentiellen elektrischen Signal einen optischen Träger zu modulieren, um ein moduliertes optisches Signal auszugeben.

## Revendications

1. Modulateur optique (100), comprenant un séparateur de faisceau (101), une première électrode de masse (105), un premier guide d'ondes (102), une première électrode de signal (106), un second guide d'ondes (103), une seconde électrode de signal (107), et un mélangeur de faisceaux (104), dans lequel
une extrémité de sortie du séparateur de faisceau (101) est connectée à des extrémités d'entrée du premier guide d'ondes (102) et du second guide d'ondes (103), et une extrémité d'entrée du mélangeur de faisceaux (104) est connectée à des extrémités de sortie du premier guide d'ondes (102) et du second guide d'ondes (103) ;
la première électrode de signal (106) est située entre le premier guide d'ondes (102) et le second guide d'ondes (103) ;
le premier guide d'ondes (102) est situé entre la première électrode de masse (105) et la première électrode de signal (106) ; et
le second guide d'ondes (103) est situé entre la première électrode de signal (106) et la seconde électrode de signal (107),
**caractérisée en ce que** la première électrode de masse (105) et la seconde électrode de signal (107) sont réparties symétriquement avec la première électrode de signal (106) en tant que centre.

2. Modulateur optique (100) selon la revendication 1, dans lequel le modulateur optique (100) comprend en outre une seconde électrode de masse (201), et la seconde électrode de signal (107) est située entre la seconde électrode de masse (201) et le second guide d'ondes (103).

3. Modulateur optique (100) selon la revendication 2, dans lequel la seconde électrode de masse (201) et la première électrode de masse (105) sont réparties symétriquement avec le second guide d'ondes (103) en tant que centre.

4. Modulateur optique (100) selon la revendication 2 ou 3, dans lequel le modulateur optique (100) comprend en outre un premier guide d'ondes factice (301), et le premier guide d'ondes factice (301) est situé entre la seconde électrode de masse (201) et la seconde électrode de signal (107).

5. Modulateur optique (100) selon la revendication 4, dans lequel le premier guide d'ondes (102) et le premier guide d'ondes factice (301) sont répartis symétriquement avec le second guide d'ondes (103) en tant que centre.

6. Modulateur optique (100) selon l'une quelconque des revendications 2 à 5, dans lequel le modulateur optique (100) comprend en outre une structure de connexion électrique (401), et la structure de connexion électrique (401) est configurée pour connecter la seconde électrode de masse (201) et la première électrode de masse (105).

7. Modulateur optique (100) selon la revendication 6, dans lequel la structure de connexion électrique (401) est une pluralité de lignes de connexion, et une distance entre deux lignes de connexion adjacentes quelconques dans la pluralité de lignes de connexion est comprise entre 100 micromètres et 500 micromètres.

8. Modulateur optique (100) selon l'une quelconque des revendications 2 à 7, dans lequel le modulateur optique (100) comprend en outre une première résistance (501) et une seconde résistance (502), dans lequel
la première résistance (501) est connectée à une extrémité de sortie de la première électrode de signal (106) ; et la seconde résistance (502) est connectée à une extrémité de sortie de la seconde électrode de signal (107).

9. Modulateur optique (100) selon la revendication 8, dans lequel le modulateur optique (100) comprend en outre un premier condensateur (601) et un second condensateur (602), dans lequel
le premier condensateur (601) est connecté à une extrémité d'entrée de la première électrode de signal (106) ;
le second condensateur (602) est connecté à une extrémité d'entrée de la seconde électrode de signal (107) ; et
la première résistance (501) et la seconde résistance (502) sont connectées à une tension de polarisation en courant continu.

10. Modulateur optique (100) selon la revendication 8, dans lequel
la première résistance (501) et la seconde résistance (502) sont connectées à un câble de masse ; et
la première électrode de masse (105) et la seconde électrode de masse (201) sont connectées à une tension de polarisation en courant continu.

11. Modulateur optique (100) selon l'une quelconque des revendications 2 à 10, dans lequel le modulateur optique (100) a une structure en forme de U, et la structure en forme de U comprend une première partie en ligne droite, une partie incurvée, et une seconde partie en ligne droite qui sont reliées séquentiellement ;
le fait que le premier guide d'ondes (102) est situé entre la première électrode de masse (105) et la première électrode de signal (106) comprend : dans la première partie en ligne droite, le premier guide d'ondes (102) est situé entre la première électrode de masse (105) et la première électrode de signal (106) ;
le fait que le second guide d'ondes (103) est situé entre la première électrode de signal (106) et la seconde électrode de signal (107) comprend : dans la première partie en ligne droite, le second guide d'ondes (103) est situé entre la première électrode de signal (106) et la seconde électrode de signal (107) ; et
dans la seconde partie en ligne droite, le premier guide d'ondes (102) est situé entre la première électrode de signal (106) et la seconde électrode de signal (107), et le second guide d'ondes (103) est situé entre la seconde électrode de signal (107) et la seconde électrode de masse (201).

12. Modulateur optique (100) selon la revendication 11, dans lequel le modulateur optique (100) comprend en outre un second guide d'ondes factice (804), et dans la seconde partie en ligne droite, le second guide d'ondes factice (804) est situé entre la première électrode de masse (105) et la première électrode de signal (106).

13. Module optique (900), comprenant un laser (901) et le modulateur optique (100) selon l'une quelconque des revendications 1 à 12, dans lequel le laser (901) est configuré pour émettre une porteuse optique vers le modulateur optique (100) ; et le modulateur optique (100) est configuré pour moduler la porteuse optique afin d'émettre un signal optique modulé.

14. Dispositif d'envoi optique (1000), comprenant un processeur (1001) et le module optique (900) selon la revendication 13, dans lequel le processeur (1001) est configuré pour émettre un signal électrique différentiel vers le module optique (900) ; et le module optique (900) est configuré pour moduler une porteuse optique sur la base du signal électrique différentiel afin d'émettre un signal optique modulé.
